# EUROPÄISCHE PATENTSCHRIFT

(11) **EP 1 093 038 B1**
(45) Veröffentlichungstag und Bekanntmachung des Hinweises auf die Patenterteilung: **17.12.2003**
(21) Anmeldenummer: 00120860.2
(22) Anmeldetag: 25.09.2000
(51) Int. Cl.: G05B 19/10, G05B 23/02, G05B 19/418

(54) **Verfahren und Vorrichtung zur Verarbeitung von für die Prozessführung in einer technischen Anlage relevanten Daten**
System and method for processing data relevant for the process control of a technical installation
Dispositif et procédé de traitement des données importantes pour contrôler le processus d'une installation technique

(30) Priorität: 15.10.1999 DE 19949853
(43) Veröffentlichungstag der Anmeldung: 18.04.2001
(73) Patentinhaber: SIEMENS AKTIENGESELLSCHAFT, 80333 München (DE)
(72) Erfinder: Kochenburger, Andreas, 76863 Herxheim (DE); Merklein, Thomas, Dr., 91056 Erlangen (DE)

(56) Entgegenhaltungen:
- EP-A- 0 829 809
- US-A- 5 917 730

## Beschreibung

Die Erfindung betrifft ein Verfahren und eine Vorrichtung zur Verarbeitung von für die Prozeßführung in einer technischen Anlage relevanten Daten. Unter Anlage ist dabei auch ein Verbund von einzelnen Anlagen zu verstehen, so daß z.B. ein Kraftwerksverbund ebenso, wie ein einzelnes Kraftwerk als Anlage anzusehen ist.

Aus der DE 198 10 045 C1 sind ein Verfahren und eine Vorrichtung zur Verarbeitung von anwenderspezifisch in verschiedenen Datenspeichern hinterlegten Daten einer technischen Anlage, insbesondere einer Kraftwerksanlage, bekannt. Unter verschiedenen Datenspeichern werden dabei insbesondere unterschiedliche Informationsverarbeitungssysteme, Datenverarbeitungssysteme oder Datenbanken verstanden, die auf unterschiedlichen Betriebssystemen basieren. Die Daten umfassen technische Prozeßdaten, wie Rückmeldungen, Zustandsmeldungen und Störmeldungen aus dem Prozeß, sowie eher betriebswirtschaftliche Anlagendaten, wie Revisionszyklen, Brennstoffverbrauch und Brennstoffkosten. Diese Daten sollen in allen Betriebsphasen der Anlage, also auch im Fall von Unregelmäßigkeiten oder Störungen des Prozeßablaufs, so ausgewählt und dargestellt werden, daß eine sichere Führung und Überwachung der Anlage ohne Überlastung des Betriebspersonals gewährleistet ist. Dies erfolgt durch eine gemeinsame, funktionsgruppenspezifische Darstellung der dynamischen Prozeßdaten und der statischen Anlagendaten, so daß sowohl der momentane Prozeßzustand als auch resultierende Maßnahmen für die Instandhaltung erkannt und eventuelle Störungen beseitigt werden können. Die Funktionsgruppen werden dabei entsprechend ihren Relationen zueinander sowie hinsichtlich der den jeweiligen Funktionsgruppen zugeordneten Daten gefiltert, verdichtet und/oder strukturiert.

Die Bereitstellung von Informationen mit interaktiver Bedienerführung unter Nutzung von sogenannten Browsern ist unter dem Begriff Internet-Technologie bekannt. Die Verbindung von Prozeßführungssystemen mit externen Informationsdienstleistern unter Nutzung von Internet-Technologien gehört ebenfalls zum Stand der Technik; ein Beispiel hierfür ist das "Ovation® Control & Information System" der Firma Westinghouse Process Control, Inc.

Aus der US 5,917,730 ist ein Datenverarbeitungssystem zur modellgestützten Simulation und Darstellung von Prozeßdaten technischer Anlagen bekannt.

Schließlich ist es bekannt, technische Prozesse mit Hilfe von Rechenmodellen zu simulieren, wobei jedoch die verwendeten Rechenmodelle häufig sehr komplex und schwierig in Betrieb zu nehmen sowie wartungsaufwendig sind, so daß sie in realen Produktionsanlagen nur selten anzutreffen sind.

In den heutigen wettbewerbsintensiven Märkten ist die Schnelligkeit und die Qualität der für unternehmerisches Handeln verfügbaren Informationen ein wesentlicher Wettbewerbsvorsprung. Insbesondere das schnelle Wissen über die eigene Kostensituation, die Verläßlichkeit des Einhaltens eingegangener Verpflichtungen und eine schnelle Reaktionsund Planungsfähigkeit sind gefordert. Hierfür bedarf es geeigneter Verfahren und Vorrichtungen.

Der Erfindung liegt daher die Aufgabe zugrunde, für die Prozeßführung in einer technischen Anlage relevante Daten in optimaler Weise bereitzustellen und darzustellen.

Gemäß der Erfindung wird die Aufgabe durch das in Anspruch 1 angegebene Verfahren bzw. die in Anspruch 7 angegebene Vorrichtung gelöst.

Vorteilhafte Weiterbildungen des erfindungsgemäßen Verfahrens bzw. der erfindungsgemäßen Vorrichtung sind den Unteransprüchen zu entnehmen.

Die aus den unterschiedlichen Datenquellen stammenden Daten werden also in vorteilhafter Weise durch Zusatzwissen in Form der in dem Rechenmodell berechneten neuen Daten ergänzt, die zusammen mit den aus den Datenquellen abgerufenen Daten kontextsensitiv dargestellt werden. Diese neuen Daten stehen daher in Echtzeit zur Verfügung, so daß unmittelbar Entscheidungen für die Prozeßführung getroffen werden können. Insbesondere können in dem Rechenmodell aus technischen Daten, z.B. die aktuelle Produktionsleistung des Prozesses, und betriebswirtschaftlichen Daten, z.B. aktuelle Rohstoffpreise, neue betriebswirtschaftliche Daten, z.B. die aktuellen Produktionskosten, berechnet werden, die bisher außerhalb der eigentlichen Prozeßführung, beispielsweise in betriebswirtschaftlichen Abteilungen, zum Teil manuell, ermittelt wurden und für schnelle Entscheidungen oft zu spät vorlagen. Die abgerufenen Daten können sowohl aus anlageneigenen Datenquellen, wie z.B. das Prozeßführungssystem oder die unternehmensinterne Datenverwaltung, als auch aus Datenquellen außerhalb der Anlage, insbesondere aus Internet/Intranet-Datenquellen, stammen.

Die Darstellung der Daten erfolgt kontextsensitiv, wobei jeweils unterschiedliche Datenquellen in Anspruch genommen werden können und die Daten vorzugsweise bereits bei ihrem Abruf aus den Datenquellen kontextsensitiv gefiltert und verdichtet werden. Der Kontext kann durch die aktuelle Situation der technischen Anlage gegeben sein, wie sie sich z.B. auf der Ausgabeeinrichtung am Arbeitsplatz des Bedienpersonals der Anlage darstellt. Er kann aber auch durch spezifische Aufgabenstellungen für das Bedienpersonals gegeben sein, so daß z.B. eine mit dem Vertrieb beauftragte, durch ihr Login erkannte, Person andere Daten und mit anderer Datenverdichtung und anderer Bedienerführung erhalten kann als eine mit der unmittelbaren Prozeßführung beauftragte Person. Der Kontext kann schließlich auch durch einen von dem Rechenmodell berechneten, insbesondere prognostizierten, Zustand der Anlage gegeben sein.

Das Rechenmodell ist vorzugsweise in der Weise prognosefähig ausgebildet, daß aus ihm zugeführten prognostizierten Daten und/oder Planungsdaten neue prognostizierte Daten berechnet werden können, die in vorteilhafter Weise zusammen mit zurückliegenden und/oder aktuellen Daten derselben Datenart dargestellt werden. Zum Beispiel kann für eine Kraftwerksanlage ausgehend von einem zukünftigen, sich aus bereits abgeschlossenen Stromabnahmeverträgen ergebenden Lastprofil der Kraftwerksanlage eine zugehörige Produktionskostenkurve prognostiziert und am Arbeitsplatz dargestellt werden. Diese lastabhängigen und vom Anlagenzustand abhängigen Kosten sind eine wertvolle Information für die Gestaltung der Angebote, insbesondere der Preisgestaltung von noch unverkauften Leistungen, etwa auf einem Spotmarkt. Die visuelle Darstellung der zurückliegenden und aktuellen Daten zusammen mit den neuen, prognostizierten Daten erfolgt vorzugsweise in einem Kurvenbild, wobei die zurückliegenden Daten links und die prognostizierten Daten rechts einer Gegenwartslinie als Kurven dargestellt werden und mittels einer Einstellvorrichtung, z.B. einer bewegbaren Leselinie, detailliertere Informationen aus der Vergangenheit und/oder dem Prognosezeitraum aufgerufen werden können. Das Kurvenbild kann dynamisch aktualisiert werden, etwa nach jedem Rechenlauf des Rechenmodells.

Ferner können mit dem Rechenmodell der Anlage Grenzwerte berechnet werden, innerhalb derer die Prozeßführung möglich ist. Zu diesen Grenzwerten zählen z.B. die vergangene, aktuelle oder prognostizierte zukünftige minimale und maximale Produktionskapazität der Anlage oder die Verfügbarkeit der Anlage bzw. der Anlagenkomponenten. Somit können beispielsweise bei einer thermischen Kraftwerksanlage die häufig durch aktuelle Zustände des Dampferzeugers bestimmte obere Kannlast und untere Kannlast gleichzeitig parallel zu der tatsächlich erzeugten Leistung und den tatsächlichen Energieerzeugungskosten berechnet und dargestellt werden. Das ermöglicht in der Retrospektive eine Bilanzierung unverkaufter Produktionskapazitäten, was bei einer Bewertung der eigenen Vertriebsstrategien hilfreich ist. In der Prognose ergibt sich eine Information über zukünftige Produktionsengpässe und/oder Erzeugungskosten bei nicht ausgelasteter Produktionsanlage. Was die Verfügbarkeit betrifft, so kann z.B. in einem Kohlekraftwerk die Nichtverfügbarkeit einer Speisewasserpumpe zu einer Einschränkung der maximal erreichbaren Leistung führen, was zu Umsatzausfall führen kann oder den teuren Fremdbezug von elektrischer Leistung erfordert, so daß durch die schnelle Darstellung der Verfügbarkeit schnelle Entscheidungen durch das Bedienpersonal ermöglicht werden.

Entsprechen einer vorteilhaften Weiterbildung der Erfindung ist das Rechenmodell, beispielsweise durch Bedienhandlungen per Maus am Arbeitsplatz, in unterschiedliche Modellstrukturen umschaltbar, die unterschiedlichen Möglichkeiten der Fahrweise der technischen Anlage entsprechen. Zum Beispiel kann in manchen thermischen Kraftwerken die Hochdruckvorwärmung des Speisewassers abgeschaltet werden, wodurch der Anlagenwirkungsgrad etwas sinkt, aber der Dampfmassenstrom durch die Turbine und damit die obere Kannlast etwas ansteigt. Die Prognosefähigkeit des Rechenmodells in Verbindung mit der Möglichkeit der Fahrweisenumschaltung kann dazu genutzt werden, verschiedene Szenarien durchzurechnen und damit auf schnellste Weise eine Grundlage zu schaffen, eine am erreichbaren Ertragsmaximum orientierte Vertriebsstrategie zu finden und die Energieerzeugung zu bestimmen. Hierbei kommen insbesondere Prognoseberechnungen der fahrweisenspezifischen Energieerzeugungskosten in Betracht sowie auch verschiedene, außerhalb der Anlage befindliche Datenquellen, die in erfindungsgemäßer Weise am jeweiligen Arbeitsplatz für schnellen Zugriff angeboten werden, insbesondere Marktpreisinformationsdienste.

Zur weiteren Erläuterung der Erfindung wird im folgenden auf die Figuren der Zeichnung Bezug genommen; im einzelnen zeigen
- Figur 1: ein Ausführungsbeispiel der erfindungsgemäßen Vorrichtung in Form eines vereinfachten Blockschaltbildes,
- Figur 2: ein Beispiel für das Rechenmodell,
- Figur 3: ein erstes Beispiel für die kontextsensitive Datendarstellung in Form eines Kurvenbildes,
- Figur 4: ein zweites Beispiel für die kontextsensitive Datendarstellung in Form eines Übersichtsbildes einer Anlage und
- Figur 5: ein erstes Beispiel für die kontextsensitive Datendarstellung in Form eines Übersichtsbildes eines Anlagenverbundes.

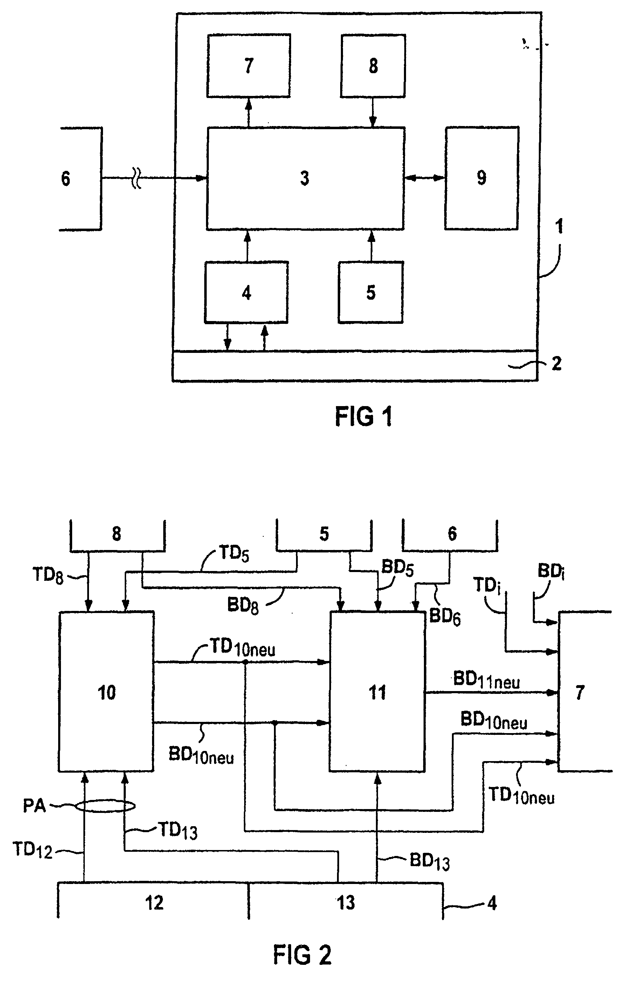

Figur 1 zeigt als vereinfachtes Blockschaltbild eine technische Anlage 1 mit einem darin ablaufenden und zu führenden Prozeß 2. Eine anlageneigene datenverarbeitenden Einheit 3, hier ein leistungsfähiger Personalcomputer, ist mit unterschiedlichen Datenquellen 4, 5 und 6 verbunden, aus denen Daten kontextsensitiv abgerufen und auf einer an der datenverarbeitenden Einheit 3 angeschlossenen Ausgabeeinrichtung 7 dargestellt werden können. Beim Abruf von Daten erfolgt in der datenverarbeitenden Einheit 3 eine ebenfalls kontextsensitive Filterung und Verdichtung der Daten. Bedieneingaben können über Tastatur, Maus oder andere Eingabeeinheiten 8 erfolgen. Die Ausgabeeinrichtung 7 kann mehrere Ausgabeeinheiten, wie einzelne Bildschirmarbeitsplätze, Großbildanzeigen oder netzwerkverbundene Rechnerclients umfassen.

Zu den Datenquellen 4, 5 und 6 gehören hier ein anlagennahes Prozeßmanagementsystem 4, das in Form eines Prozeßführungssystems und/oder Betriebsführungssystems mit einem Instandhaltungssystem ausgebildet ist, ein unternehmensinternes EDV-System 5 zur betriebswirtschaftlichen Datenverwaltung, Archivierung und Kommunikation sowie externe Datendienste 6, auf die hier z.B. mit Hilfe von Intranet/Internet-Kommunikationsmechanismen zugegriffen wird. Über den Intranet/Internet-Anschluß sind, insbesondere mittels einer Browser-Software, Daten zugänglich, die kontextsensitiv angeboten und auf der Ausgabeeinrichtung 7 dargestellt werden können. Beispielsweise können die Dienste eines kommerziellen Informationsdienstleisters, etwa für Brennstoffpreisprognosen oder eines Stromhandelsplatzes, nur dann bereitgestellt werden, wenn sie für vertriebsbezogene Aufgaben genutzt werden sollen. Darüber hinaus können die externen Informationsdienste auch selbst aktiv Informationen übermittelt bekommen, etwa neue Daten, die bei der Datenverarbeitung in der erfindungsgemäßen Vorrichtung neu entstehen, oder von dem Bedienpersonal eingegebene Entscheidungen.

Schließlich ist an der datenverarbeitenden Einheit 3 ein prognosefähiges Rechenmodell 9 angeschlossen, welches technisch-ökonomische Zusammenhänge der Anlage 1 simuliert.

Figur 2 zeigt beispielhaft ein Blockschaltbild des Rechenmodells 9, welches aus einem technischen Teilmodell 10 (Prozeßmodell) und einem betriebswirtschaftlichen Teilmodell 11 (Kostenmodell) besteht. Die Teilmodelle 10 und 11 können aus Daten, die ihnen aus den Datenquellen 4, 5 und 6 sowie der Eingabeeinheit 8 zugeführt werden, diskret oder zyklisch, quasi zeitkontinuierlich, neue Daten, beispielsweise in Form Zeitreihen analoger und binärer Größen, berechnen.

Das technische Teilmodell 10 modelliert wesentliche technische Zusammenhänge der Anlage 1 mit dem darin ablaufenden Prozeß 2, wobei diese Zusammenhänge durch Softwarecodes oder durch verknüpfte Rechen- und Funktionsbausteine modelliert werden. Zur Synchronisierung mit dem jeweils aktuellen Prozeßzustand erhält das technische Teilmodell 10 technische Daten TD₁₂ in Form von aktuellen Meßwerten, beispielsweise aktuelle Durchflußmengen oder Zustände der Hauptantriebe, von einem Prozeßführungssystem 12, welches Bestandteil des Prozeßmanagementsystems 4 ist. Von einem Instandhaltungssystem 13, welches ebenfalls Bestandteil des Prozeßmanagementsystems 4 ist, erhält das technische Teilmodell 10 technische Daten TD₁₃ in Form von Angaben über aktuelle und zukünftige Betriebsbereitschaften wichtiger Komponenten der Anlage 1. Auf diese Weise wird dem technischen Teilmodell 10 ein stets den aktuellen Anlagenzustand repräsentierendes Prozeßabbild PA zugeführt. Darüber hinaus erhält das technische Teilmodell 10 von der Eingabeeinheit 8 und dem EDV-System 5 technische Daten TD₈ und TD₅ in Form von Sollwerten, Anlagen- und Prozeßparametern, wie Angaben über die in dem Prozeß 2 eingesetzten Stoffe, wie Brennstoffe, Angaben über die Fahrweise der Anlage 1 usw. Aus den ihm zugeführten Daten TD_{5,8,12,13} berechnet das technische Teilmodell 10 neue technische Daten TD₁₀ₙₑᵤ sowie neue betriebswirtschaftlich relevante Daten BD₁₀ₙₑᵤ. Mit den neuen Daten stehen somit in vorteilhafter Weise Prozeßgrößen zur Verfügung, für die es keine Meßstellen in der realen Anlage 1 gibt.

Die neuen betriebswirtschaftlich relevanten Daten BD₁₀ₙₑᵤ werden zusammen mit betriebswirtschaftlichen Daten BD_{13,5,6,8}, die von dem Instandhaltungssystem 13, dem EDV-System 5, externen Datendiensten 6 oder über die Eingabeeinheit 8 zur Verfügung gestellt werden, dem betriebswirtschaftlichen Teilmodell 11 zugeführt, das daraus neue betriebswirtschaftliche Daten BD₁₁ₙₑᵤ berechnet. Sämtliche von den Datenquellen 4, 5 und 6 bereitgestellten Daten, die über die Eingabeeinheit 8 eingegebenen Daten und die von den Teilmodellen 10 und 11 berechneten neuen Daten werden kontextsensitiv auf der Ausgabeeinrichtung 7 dargestellt. Der Abruf der Daten aus den Datenquellen 4, 5 und 6 und die Darstellung von Daten auf der Ausgabeeinrichtung 7 wird durch die datenverarbeitenden Einheit 3 gesteuert.

Die von dem technischen Teilmodell 10 modellierten technischen Zusammenhänge sind hier dergestalt, daß aus dem Prozeßabbild PA und vorgegebenen Prozeßsollwerten bzw. Produktionszielen über wenigstens einen Rechenschritt die tatsächlich erreichbare Produktionsleistung bzw. -menge berechnet werden kann. Die technischen Zusammenhänge sind beispielsweise durch Systeme von Differenzengleichungen darstellbar, die durch das technischen Teilmodell 10 numerisch gelöst werden. Eine hierzu bekannte einfache Realisierungsmethode stellt die Verwendung von Tabellenkalkulationen dar, wobei die Differenzengleichungen durch Formelverknüpfungen von Zellen realisiert werden und die Zeitreihen der Ein- und Ausgangsgrößen als Werte in Zeilen oder Spalten der Kalkulationstabellen enthalten sind.

Durch "Sprungaufschaltung", hier durch Aufschaltung der maximalen und minimalen Prozeßsollwerte bzw. Produktionsziele lediglich auf das technische Teilmodell 10 nicht aber auf die reale Anlage 1, läßt sich die "Sprungantwort" der Anlage 1, also ihre zeitliche Reaktion bis zum Erreichen von Produktionskapazitätsgrenzen ermitteln. In einer Kraftwerksanlage können auf diese Weise die obere und unter Kannlast der Anlage, gegebenenfalls mit Leistungseinschränkungen, und der zulässige Gradient für Laständerungen ausgehend vom aktuellen Lastpunkt auf besonders bequeme Weise ermittelt und anschließend dargestellt werden.

Im Falle eines eine thermische Kraftwerksanlage modellierenden technischen Teilmodells 10 entspricht das Produktionsziel in der Regel dem durch den Lastverteiler des Stromverbundnetzes vorgegebenen elektrischen Leistungsprofil für einen bestimmten Zeitraum. Ein weiterer wichtiger, durch das technische Teilmodell 10 und auch durch das betriebswirtschaftliche Teilmodell 11 zu berücksichtigender Parameter ist die Wahl des Brennstoffs, da sowohl die Leistungsentwicklung und Leistungsgrenzen als auch die zugehörige Produktionskostenentwicklung bei Verwendung unterschiedlicher Brennstoffsorten, Heizwerte und verschiedener Brennstoffbeschaffungskosten unterschiedlich sind. Auch die zeitliche Verfügbarkeit eines Einsatzstoffes, bei einer Raffinerie etwa des Rohöls, kann in gleicher Weise in der Modellrechnung mit berücksichtigt werden. Einen weiteren Parameter stellt die Wahl einer bestimmten Fahrweise der Anlage 1 dar. Beispielsweise können bei vielen Gas- und Dampfturbinenkraftwerk die folgenden Fahrweisen eingestellt sein: reiner Gasturbinenbetrieb, reiner Dampfturbinenbetrieb mit Feuerung des Abhitzekessels, und der übliche kombinierte Betrieb mit Nutzung der Gasturbinenabgaswärme im Abhitzekessel.

Die wesentliche Aufgabe des betriebswirtschaftliche Teilmodells 11 ist hier die Berechnung der für eine bestimmte Produktionsleistung zu erwartenden Produktionskosten. Diese setzen sich aus verschiedenen Kostenanteilen, nämlich aus einem mengen- oder produktionsleistungsproportionalen Kostenanteil und sogenannten Fixkostenanteilen, zusammen. Der leistungsproportionale Kostenanteil wird durch das betriebswirtschaftliche Teilmodell 11 aus der Produktionsleistung, der Verfügbarkeit der Anlage 1 und deren Wirkungsgrad berechnet, wobei diese Daten zuvor in dem technischen Teilmodell 10 berechnet wurden. In der Regel wird ein proportionaler Kostenanstieg bei steigender Produktionsleistung vorliegen. Bei reduzierter Anlagenverfügbarkeit durch Stillstand der Anlage 1 wird in der Regel ein geringerer Eigenverbrauch der Anlage 1 und damit eine umgekehrt proportionale Kostenwirkung vorliegen. Bei höherem technischen Wirkungsgrad der Anlage 1 wird in der Regel eine bessere Ausnutzung der Einsatzstoffe, z.B. des Brennstoffs, ebenfalls eine Senkung von Produktionskosten bewirken. Die in dem betriebswirtschaftlichen Teilmodell 11 eingesetzten Realisierungsmethoden können die gleichen sein wie bei dem technischen Teilmodell 10.

Ein wesentlicher Vorteil des Rechenmodells 9 besteht darin, daß es aus vorgegebenen Verläufen von Produktionszielen innerhalb eines durch die Modellierungsgenauigkeit einstellbaren Vertrauensbereichs Aussagen über erreichbare Produktionsmengen und Aussagen über die Fähigkeit und Leistungsgrenzen der Produktionsanlage liefert, sowie der zugehörigen Produktionskosten. Auf diese Weise wird neues Zusatzwissen gebildet, das allein aus meß- und steuerungstechnischen Vorrichtungen innerhalb der Anlage 1 oder aus Vorrichtungen des Anlagenmanagements und der Produktionsplanung nicht ermittelbar ist.

Als besonders wertvoll erweist sich die Prognosefähigkeit des Rechenmodells 9, da es aus einem vorgegebenen, beispielsweise dem aktuellen Prozeßabbild PA entsprechenden, Zustand der Anlage 1 über wenigstens einen Rechenschritt einen Zustand zu einem Folgezeitpunkt berechnen kann. Durch einfache Rekursionsrechnung lassen sich somit Zeitreihen erzeugen, die einem möglichen Produktions- und Kostenverlauf über lange zukünftige Zeiträume entsprechen. Dabei können Produktionsengpässe der Anlage, und zukünftige Komponentenverfügbarkeiten, die durch das Instandhaltungssystem 13 bereitgestellt werden, in der Prognoserechnung leicht mitberücksichtigt werden.

Ein weiterer Vorteil liegt darin, daß die Anforderung an die Modellierungsgenauigkeit des technischen Teilmodells 10 im wesentlichen durch die erwartete Genauigkeit bei der Berechnung der neuen betriebswirtschaftlichen Daten, hier der Produktionskosten, bestimmt wird. Herkömmliche verfahrenstechnische Prozeßmodelle sind dagegen oft sehr komplex, wobei der Modellierungsaufwand nahezu exponentiell mit der angestrebten Berechnungsgenauigkeit steigt. Da bei der Berechnung der Produktionskosten durch das betriebswirtschaftliche Teilmodell 11 in der Regel eine Genauigkeit der Größenordnung von 5% ausreicht, reicht für das technische Teilmodell 10 eine Modellierungsgenauigkeit der gleichen oder einer nur wenig besseren Größenordnung aus.

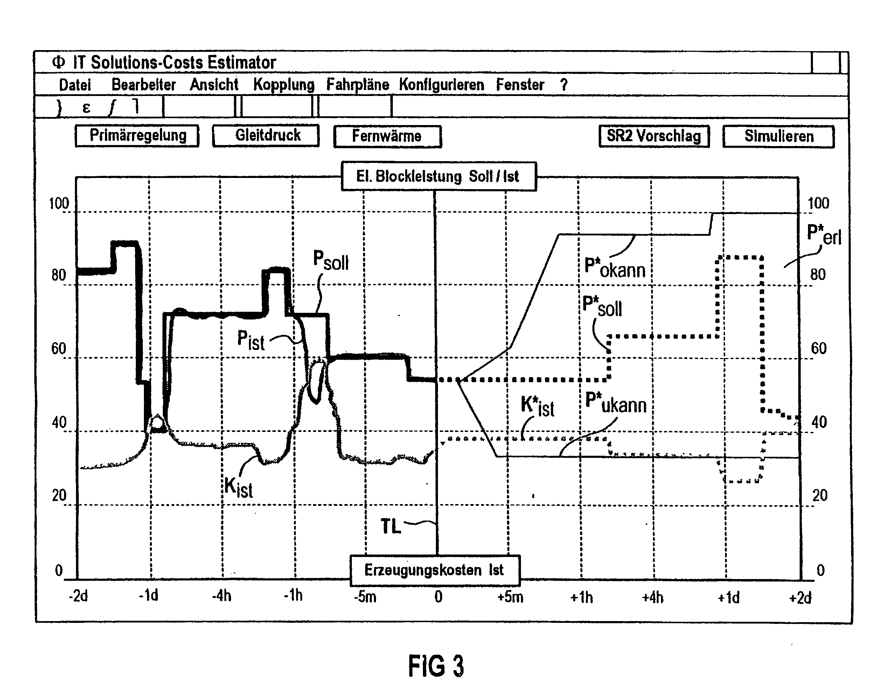

Figur 3 zeigt ein von der Ausgabeeinrichtung 7 dargestelltes Kurvenbild, wobei eine Fenstertechnik eines graphischen Computer-Betriebssystems benutzt wird. Die Bedienung von Fenstern, Symbolleisten und Menüanwahlen erfolgt darin in beispielsweise vom Betriebssystem Windows® bekannter Weise. Die größte Fläche des dargestellten Fensters wird von einem Bereich eingenommen, dessen horizontale Ausdehnungsrichtung (Zeitachse) einer Zeit und dessen vertikale Ausdehnungsrichtung einer Prozentangabe (Prozentachse) entspricht. Dieser Bereich ist in horizontaler Ausdehnungsrichtung zweigeteilt, wobei eine mittlere vertikale Trenn- oder Gegenwartslinie TL dem gegenwärtigen Zeitpunkt entspricht. Links von der Gegenwartslinie TL werden Prozentwerte vergangener Zeitpunkte und rechts von der Gegenwartslinie TL prognostizierte Prozentwerte zukünftiger Zeitpunkte dargestellt. Durch nichtlineare Skalierung der Zeitachse in der Nähe der Gegenwartslinie TL wird dort eine höhere Auflösung erreicht, als bei weiter entfernten Zeitpunkten in der Zukunft bzw. Vergangenheit. Die Anzeige wird in regelmäßigen Zeitabständen aktualisiert, so daß die Aktualität der dargestellten Daten stets gewährleistet ist.

In dem linken, die vergangene Zeit darstellenden, Teilbereich des Kurvenbildes sind Kurvenverläufe des Produktionsziels Pₛₒₗₗ an elektrischer Blockleistung und der tatsächlich erreichten Blockleistung Pᵢₛₜ aufgetragen. Das Produktionsziel Pₛₒₗₗ wurde von der Prozeßführung nach Vorgaben des Lastverteilers eingestellt, während die erreichte Blockleistung Pᵢₛₜ durch das Prozeßführungssystem gemessen wurde. Nicht dargestellt ist die Möglichkeit, z.B. per Menübedienung, die vom Prozeßmodell errechnete Blockleistung neben der gemessenen Blockleistung Pᵢₛₜ darzustellen, so daß hierüber eine schnelle Überprüfung der Modellgenauigkeit möglich ist.

Ebenfalls in dem linken Teilbereich ist ein Kurvenverlauf von zur tatsächlichen Blockleistungskurve Pᵢₛₜ gehörigen Produktionskosten Kᵢₛₜ aufgetragen. Ersichtlich ist, daß bei niederer Blockleistung Pᵢₛₜ durch einen höheren Fixkostenanteil höhere Produktionskosten Kᵢₛₜ entstehen.

In dem rechten Teilbereich des Kurvenbildes sind ein möglicher zukünftiger Leistungssollwert P*ₛₒₗₗ und Prognoseergebnisse des Rechenmodells, hier der zu dem Verlauf des Leistungssollwerts P*ₛₒₗₗ errechnete Verlauf der zu erwartenden Produktionskosten K*ᵢₛₜ graphisch dargestellt. Ferner ist der ebenfalls von dem Rechenmodell berechnete technisch erlaubte Bereich der Anlagenleistung P*ₑᵣₗ dargestellt, der nach oben durch den Verlauf der oberen Produktionskapazität, bei einem Kraftwerk die obere Kannlast P*ₒₖₐₙₙ, und nach unten durch den Verlauf der unteren Produktionskapazität, die untere Kannlast P*ᵤₖₐₙₙ, begrenzt. Die untere Produktionskapazität ist häufig dasjenige Produktionsvolumen pro Zeiteinheit, der für einen Minimalbetrieb der Anlage erforderlich ist. So sind bei verfahrenstechnischen Prozessen, z.B. im Chemiebetrieb, häufig Mindestdurchflüsse zur Kühlung und Aufrechterhaltung von Betriebsdrücken erforderlich.

Die dargestellte obere Kannlast P*ₒₖₐₙₙ ist vom gegenwärtigen Zeitpunkt aus voraussichtlich fast einen Tag lang um etwa10% reduziert. Diese Information stammt aus Daten des Instandhaltungssystems 4 die im Rechenmodell bei der Berechnung der Produktionskapazitäten, hier der Kannlasten, mit berücksichtigt werden. Instandhaltung, Produktionsplanung und Vertrieb bekommen auf diese Weise ein wertvolles Werkzeug zur Unterstützung einer schnellen Zusammenarbeit.

Die linke Begrenzung des technisch erlaubten Bereichs der Anlagenleistung P*ₑᵣₗ ist durch die maximal und minimal möglichen Gradienten der Produktionsänderung bestimmt. Damit wird auf besonders einfache Weise dargestellt, ob und zu welchem Zeitpunkt eine bestimmte Produktionsleistung eingenommen werden kann.

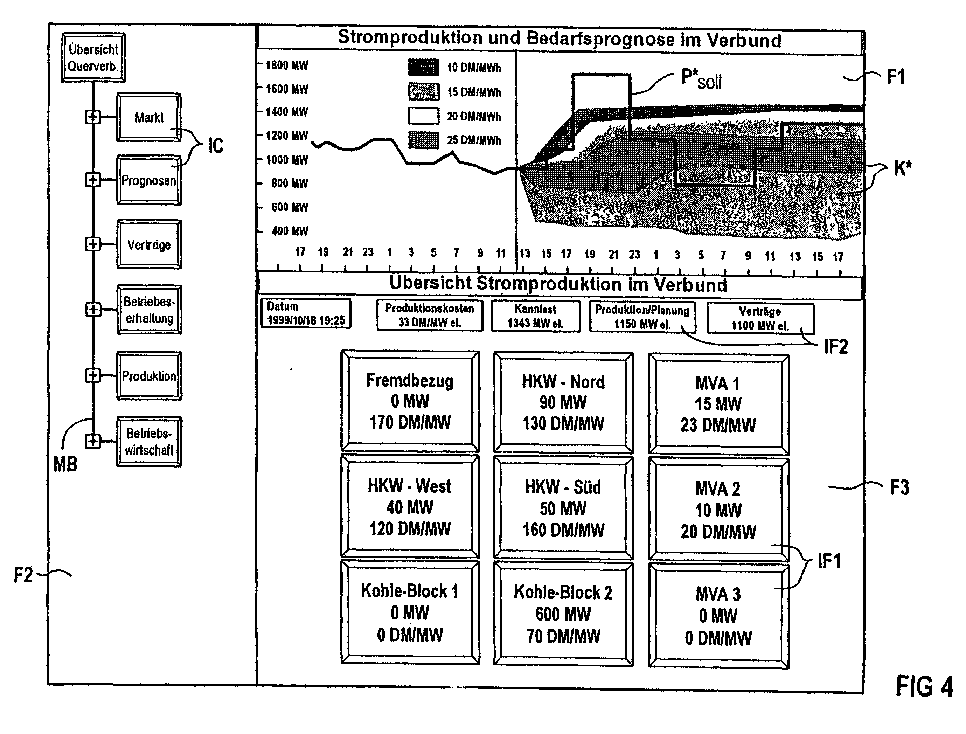

Figur 4 zeigt ein von der Ausgabeeinrichtung 7 dargestelltes Übersichtsbild eines Verbunds einzelner Kraftwerksanlagen (Kraftwerksverbunds). Es sind drei Frames F1, F2 und F3, d.h. Bildschirmbereiche, mit unterschiedlichen Informationsinhalten und Bedienmöglichkeiten dargestellt.

Der erste Frame F1 rechts oben stellt ein ähnliches Kurvenbild wie Figur 3 dar. Die Zeitachse ist jetzt linear. Links ist der Verlauf der zurückliegenden Produktionsleistung Pᵢₛₜ ersichtlich, rechts von der Gegenwartslinie TL die geplante zukünftige Produktionsleistung P*ₛₒₗₗ. Die Produktionskostenbereiche K* innerhalb des technisch erlaubten Bereichs der Anlagenleistung P*ₑᵣₗ sind als farbige Flächen dargestellt, die einen Hintergrund zur geplanten zukünftigen Produktionsleistung P*ₛₒₗₗ bilden. Damit ist auf einen Blick ersichtlich, welche Produktionsleistung P*ₛₒₗₗ welche spezifischen Kosten bewirken würden. Im Beispiel ist auch dargestellt, daß zwischen 17 Uhr und 22 Uhr der Kraftwerksverbund nicht die geplante Leistung wird erbringen können, so daß Ersatzstrategien, beispielsweise eine Kompensation durch Fremdbezug, entscheiden werden müssen.

Der zweite Frame F2 links stellt einen Menübaum MB dar, der den Zugang zu unterschiedlichen Datenangeboten, wie Marktdaten, Prognosedaten usw., ermöglicht und dazu mit der Maus bedient werden kann. Beim Anklicken auf einen Ast, der hier durch ein das jeweilige Datenangebot repräsentierendes Icon IC dargestellt ist, werden Aktionen zum Abruf der Daten aus den jeweiligen sie bereitstellenden Datenquellen 4, 5, 6 ausgelöst, indem z.B. eine Internetverbindung aufgebaut, ein lokales Programm gestartet oder eine Clientverbindung zur Bedienung und Beobachtung des Prozeßleitsystems 4 aufgebaut wird. Die Darstellung kann sehr individuell gestaltet werden. So kann der Menübaum MB auch in der Weise gestaffelt sein, daß sich beim Anklicken eines Astes weitere Unteräste zur Bedienung öffnen. Die Bedienphilosophie ist hier ähnlich der eines Internetbrowsers.

Der dritte Frame F3 rechts unten stellt eine Übersicht über neun verschiedene, als kombinierte Informationsflächen und mausbedienbare Schaltknöpfe IF1 gestaltete, Kraftwerksanlagen dar, aus denen der Kraftwerksverbund besteht: drei Heizkraftwerke HKW, drei Müllverbrennungsanlagen MVA, zwei Blöcke eines Kohlekraftwerks und eine Kraftwerksanlage. Jeder dieser neun Informationsflächen/Schaltknöpfe IF1 zeigt den zum Gegenwartszeitpunkt in dem ersten Frame F1 gehörenden Zustand der Momentanproduktion Pᵢₛₜ und Produktionskosten Kᵢₛₜ der entsprechenden Energieerzeugungsquelle. Durch Farbgebung der Umrandung der Informationsflächen/Schaltknöpfe IF1 entsprechend der Hintergrundfarben im Prognosebereich K* des ersten Frames F1 ist ebenfalls sofort ersichtlich, in welchem relativen Kostenband sich die betreffende Anlage befindet bzw. befinden wird. Oberhalb der Informationsflächen/Schaltknöpfe IF1 sind fünf weitere kombinierte Informations- und Schaltflächen ersichtlich, mit denen vertiefte Informationen und Bedienmöglichkeiten zu verschiedenen Themen, wie Datum für zeitbehaftete Einstellungen, Produktionskosten, Produktionsengpässe, Planung, Verträge, hier z.B. bereits verkaufte Produktionsmengen, angeboten werden.

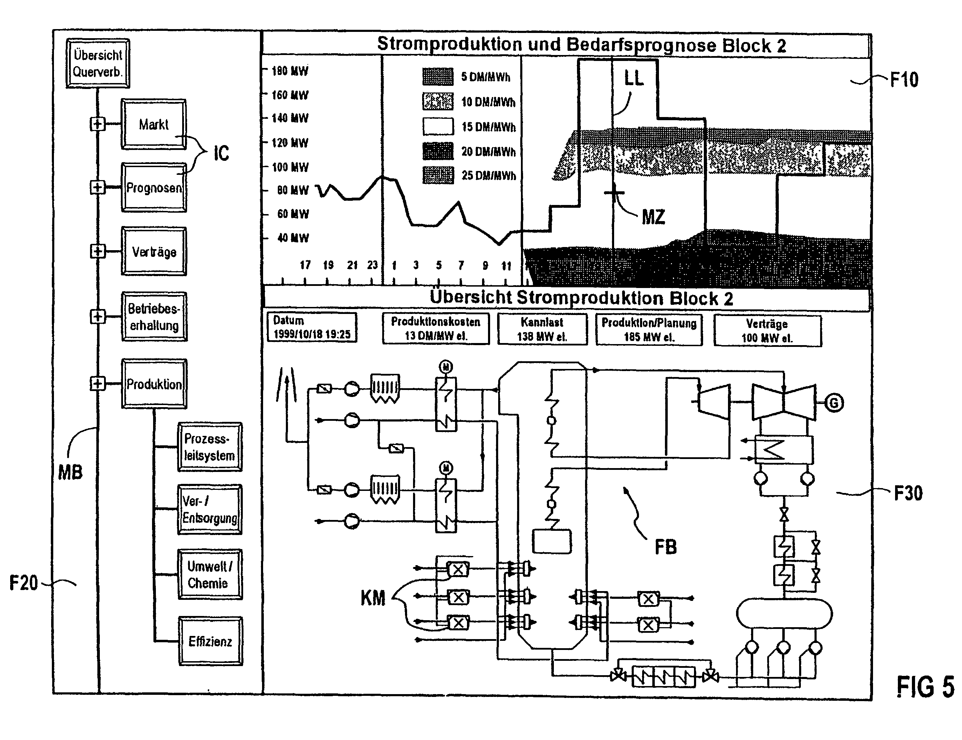

Figur 5 zeigt beispielhaft ein Übersichtsbild einer Kraftwerksanlage, hier des zweiten Blocks des Kohlekraftwerks, wie es nach einer Betätigung der entsprechenden Informationsfläche/Schaltknopf IF1 im dritten Frame F3 des in Figur 4 gezeigten Übersichtsbildes von der Ausgabeeinrichtung 7 dargestellt wird. Dabei entspricht der grundsätzliche Aufbau des Übersichtsbildes nach Figur 5 mit ebenfalls drei Frames F10, F20 und F30 dem des in Figur 4 gezeigten Übersichtsbildes

Der erste Frame F10 rechts oben bezieht sich jetzt nicht auf die Leistung des Anlagenverbundes wie in Figur 4, sondern auf anlagenindividuelle Produktion, Produktionskosten und Prognosedaten. In diesem Frame F10 ist neben einer neuen Leselinie LL im Prognosezeitraum auch noch ein kreuzförmiger Mauszeiger MZ zur leichten Verschiebung und Anwahl eines interessierenden Zeitpunkts gezeigt. Hier nicht dargestellt ist die Möglichkeit, über Menübedienungen zum Leselinienzeitpunkt detailliertere Informationen aus einem Archiv, oder im Prognosezeitraum aus dem Rechenmodell, darzustellen.

Der zweite Frame F20 links zeigt den Menübaum MB wie in Figur 4 mit einem expandierten Unterast, wobei das Datenangebot kontextsensitiv von den für die jeweils ausgewählte Kraftwerksanlage, hier der zweite Block des Kohlekraftwerks, relevanten Datenquellen bereitgestellt wird. D.h. bei einer Anwahl einer anderen Produktions- bzw. Kraftwerksanlage würden eine andere Struktur des Menübaums und andere Datenangebote von der Ausgabeeinrichtung 7 dargestellt werden.

Der dritte Frame F30 rechts unten zeigt ein Fließbild FB der ausgewählten Kraftwerksanlage. Durch Farbkodierung und Einblendung von analogen Werten aus dem Archiv bzw. Prozeßmodell wird ein schneller und verdichteter Überblick über den Zustand wesentlicher Anlagenkomponenten und von Produktionsdaten gegeben. So sind in dem Fließbild FB beispielsweise zwei Kohlemühlen KM in dunkler Farbe dargestellt, um zu verdeutlichen, daß sie durch ein Instandhaltungssystem für den durch die Leselinie LL in dem ersten Frame F10 gewählten Zeitpunkt als "außer Betrieb" gemeldet wurden.

## Patentansprüche

1. Verfahren für die Verarbeitung von für die Prozeßführung in einer technischen Anlage (1) relevanten Daten, die dateninhalts- und/oder anwendungsspezifisch von verschiedenen Datenquellen (4, 5, 6) innerhalb und erforderlichenfalls außerhalb der Anlage (1) bereitgestellt werden und aus diesen abgerufen werden, wobei eine vorgegebene Auswahl der abgerufenen Daten einem Rechenmodell (9) der Anlage (1) zugeführt wird und wobei von dem Rechenmodell (9) aus den ihm zugeführten Daten berechnete neue Daten zusammen mit den abgerufenen Daten in bezug auf spezifische Situationen und/oder Aufgaben der Prozeßführung kontextsensitiv dargestellt werden,
**dadurch gekennzeichnet, daß**
in einem technischen Teilmodell (10) des Rechenmodells (9) aus aus den Datenquellen (4, 5, 6) abgerufenen, für die Prozeßführung relevanten technischen Daten betriebswirtschaftlich relevante Daten berechnet werden, und daß in einem betriebswirtschaftlichen Teilmodell (11) des Rechenmodells (9) aus aus den Datenquellen (4, 5, 6) abgerufenen, für die Prozeßführung relevanten betriebswirtschaftlichen Daten sowie aus den von dem technischen Teilmodell (10) berechneten betriebswirtschaftlich relevanten Daten neue betriebswirtschaftliche Daten berechnet werden.

2. Verfahren nach Anspruch 1,
**dadurch gekennzeichnet, daß** vorgegebene betriebswirtschaftliche Daten aus Internet/Intranet -Datenquellen (6) abgerufen werden.

3. Verfahren nach Anspruch 1 oder 2,
**dadurch gekennzeichnet, daß**
die Daten bei ihren Abruf kontextsensitiv gefiltert und verdichtet werden.

4. Verfahren nach einem der Ansprüche 1 bis 3,
**dadurch gekennzeichnet, daß**
dem Rechenmodell (9) prognostizierte Daten und/oder Planungsdaten zugeführt werden und daraus neue prognostizierte Daten berechnet werden.

5. Verfahren nach Anspruch 4,
**dadurch gekennzeichnet, daß** zurückliegende und/oder aktuelle Daten zusammen mit prognostizierten Daten derselben Datenart dargestellt werden.

6. Verfahren nach einem der vorangehenden Ansprüche,
**dadurch gekennzeichnet, daß**
das Rechenmodell (9) als neue Daten Grenzwerte berechnet, innerhalb derer die Prozeßführung erfolgen kann.

7. Vorrichtung für die Verarbeitung von für die Prozeßführung in einer technischen Anlage (1) relevanten Daten, die dateninhalts- und/oder anwendungsspezifisch von verschiedenen Datenquellen (4, 5, 6) innerhalb und erforderlichenfalls außerhalb der Anlage (1) bereitgestellt werden, mit einer datenverarbeitenden Einheit (3) zum Abruf der bereitgestellten Daten, mit einem Rechenmodell (9) der Anlage (1), das dazu ausgebildet ist, aus einer ihm zugeführten vorgegebenen Auswahl der abgerufenen Daten neue Daten zu berechnen, und mit einer Ausgabeeinrichtung (7), die dazu ausgebildet ist, die berechneten neuen Daten zusammen mit den abgerufenen Daten in bezug auf spezifische Situationen und/oder Aufgaben der Prozeßführung kontextsensitiv darzustellen,
**dadurch gekennzeichnet, dass**
das Rechenmodell (9) aus einem technischen Teilmodell (10) und einem betriebswirtschaftlichen Teilmodell (11) besteht, wobei das technische Teilmodell (10) dazu ausgebildet ist, aus aus den Datenquellen (4, 5, 6) abgerufenen, für die Prozeßführung relevanten technischen Daten betriebswirtschaftlich relevante Daten zu berechnen, und wobei das betriebswirtschaftliche Teilmodell (11) dazu ausgebildet ist, aus aus den Datenquellen (4, 5, 6) abgerufenen, für die Prozeßführung relevanten betriebswirtschaftlichen Daten sowie aus den von dem technischen Teilmodell (10) berechneten betriebswirtschaftlich relevanten Daten neue betriebswirtschaftliche Daten zu berechnen.

8. Vorrichtung nach Anspruch 7,
**dadurch gekennzeichnet, daß**
das Rechenmodell (9) in unterschiedliche Modellstrukturen umschaltbar ist, die unterschiedlichen Möglichkeiten der Fahrweise der technischen Anlage (1) entsprechen.

## Claims

1. Method of processing data which is relevant to process control in a technical installation (1), and which is provided and called up specifically to the data content and/or application from various data sources (4, 5, 6) within and if required outside the installation (1), a specified selection of the called-up data being fed to a computational model (9) of the installation (1), and new data which the computational model (9) computes from the data which is fed to it, together with the called-up data, in relation to specific situations and/or tasks of process control, being shown context-sensitively,
**characterized in that** in a technical submodel (10) of the computational model (9), from technical data which is relevant to process control and is called up from the data sources (4, 5, 6), commercially relevant data is computed, and that in a commercial submodel (11) of the computational model (9), from commercial data which is relevant to process control and is called up from the data sources (4, 5, 6) and commercially relevant data which is computed by the technical submodel (10), new commercial data is computed.

2. Method according to Claim 1,
**characterized in that** specified commercial data can be called up from Internet/intranet data sources (6).

3. Method according to Claim 1 or 2,
**characterized in that** when the data is called up, it is filtered and compressed context-sensitively.

4. Method according to one of Claims 1 to 3,
**characterized in that** forecast data and/or planning data is fed to the computational model (9) and new forecast data is computed from it.

5. Method according to Claim 4,
**characterized in that** past and/or current data is shown, together with forecast data of the same data type.

6. Method according to one of the preceding claims,
**characterized in that** the computational model (9) computes, as new data, limits within which the process control can take place.

7. Device for processing data which is relevant to process control in a technical installation (1), and which is provided and called up specifically to the data content and/or application from various data sources (4, 5, 6) within and if required outside the installation (1), with a data processing unit (3) to call up the provided data, a computational model (9) of the installation (1) in a form to compute new data from a specified selection of the called-up data which is fed to it, and an output facility (7) in a form to show the computed new data, together with the called-up data, in relation to specific situations and/or tasks of process control, context-sensitively,
**characterized in that** the computational model (9) consists of a technical submodel (10) and a commercial submodel (11), the technical submodel (10) being in a form to compute commercially relevant data from technical data which is relevant to process control and is called up from the data sources (4, 5, 6), and the commercial submodel (11) being in a form to compute new commercial data from commercial data which is relevant to process control and is called up from the data sources (4, 5, 6), and commercially relevant data which is computed by the technical submodel (10).

8. Device according to Claim 7,
**characterized in that** the computational model (9) can be switched into different model structures, corresponding to different possible ways of running the technical installation (1).

## Revendications

1. Procédé pour le traitement de données qui sont déterminantes pour la commande de processus dans une installation technique (1), qui sont mises à disposition de manière spécifique au contenu de données et/ou à l'application par différentes sources de données (4, 5, 6) à l'intérieur et si nécessaire à l'extérieur de l'installation (1) et qui sont appelées hors de ces sources de données, une sélection prédéterminée des données appelées étant envoyée à un modèle de calcul (9) de l'installation (1 ) et de nouvelles données calculées par le modèle de calcul (9) à partir des données qui lui sont envoyées étant présentées conjointement aux données appelées en contexte par rapport à des situations et/ou tâches spécifiques de la commande de processus,
**caractérisé par le fait que**, dans un sous-modèle technique (10) du modèle de calcul (9), des données économiques sont calculées à partir de données techniques appelées hors des sources de données (4, 5, 6) et déterminantes pour la commande de processus et, dans un sous-modèle économique (11) du modèle de calcul (9), de nouvelles données économiques sont calculées à partir de données économiques appelées hors des sources de données (4, 5, 6) et déterminantes pour la commande de processus et à partir des données économiques déterminantes calculées par le sous-modèle technique (10).

2. Procédé selon la revendication 1,
**caractérisé par le fait que** des données économiques prédéterminées sont appelées hors des sources de données Internet / Intranet (6).

3. Procédé selon la revendication 1 ou 2,
**caractérisé par le fait que** les données lors de leur appel sont filtrées et comprimées en contexte.

4. Procédé selon l'une des revendications 1 à 3,
**caractérisé par le fait que** des données de pronostic et/ou des données de planification sont envoyées au modèle de calcul (9) et de nouvelles données pronostiquées sont calculées à partir de là.

5. Procédé selon la revendication 4,
**caractérisé par le fait que** des données antérieures et/ou actuelles sont présentées conjointement à des données pronostiquées du même type.

6. Procédé selon l'une des revendications précédentes,
**caractérisé par le fait que** le modèle de calcul (9) calcule comme nouvelles données des valeurs limites à l'intérieur desquelles la commande de processus peut s'effectuer.

7. Dispositif pour le traitement de données qui sont déterminantes pour la commande de processus dans une installation technique (1) et qui sont mises à disposition de manière spécifique au contenu de données et/ou à l'application par différentes sources de données (4, 5, 6) à l'intérieur et si nécessaire à l'extérieur de l'installation (1), avec une unité de traitement de données (3) pour l'appel des données mises à disposition, avec un modèle de calcul (9) de l'installation (1) qui est conçu pour calculer de nouvelles données à partir d'une sélection prédéterminée de données appelées qui lui sont envoyées et avec un dispositif de sortie (7) qui est conçu pour présenter les nouvelles données calculées conjointement aux données appelées en contexte par rapport à des situations et/ou tâches spécifiques de la commande de processus,
**caractérisé par le fait que** le modèle de calcul (9) est constitué d'un sous-modèle technique (10) et d'un sous-modèle économique (11), le sous-modèle technique (10) étant conçu pour calculer des données économiques à partir de données techniques appelées hors des sources de données (4, 5, 6) et déterminantes pour la commande de processus et le sous-modèle économique (11) étant conçu pour calculer de nouvelles données économiques à partir de données économiques appelées hors des sources de données (4, 5, 6) et déterminantes pour la commande de processus et à partir des données économiques déterminantes calculées par le sous-modèle technique (10).

8. Dispositif selon la revendication 7,
**caractérisé par le fait que** le modèle de calcul (9) peut être commuté dans différentes structures de modèle qui correspondent à différents modes de fonctionnement possibles de l'installation technique (1 ).
